(19) Europäisches Patentamt
European Patent Office
Office européen des brevets

(11) **EP 2 707 263 B1**

(12) **EUROPÄISCHE PATENTSCHRIFT**

(45) Veröffentlichungstag und Bekanntmachung des Hinweises auf die Patenterteilung:
**20.05.2015 Patentblatt 2015/21**

(21) Anmeldenummer: **12707489.6**

(22) Anmeldetag: **02.03.2012**

(51) Int Cl.:
**B60T 17/22** (2006.01) **B60T 13/66** (2006.01)
**B60T 13/74** (2006.01) **B60T 13/58** (2006.01)

(86) Internationale Anmeldenummer:
**PCT/EP2012/000947**

(87) Internationale Veröffentlichungsnummer:
**WO 2012/152350 (15.11.2012 Gazette 2012/46)**

(54) **TECHNIK ZUM ERMITTELN EINER AN EINER HYDRAULISCH UND MECHANISCH BETÄTIGBAREN FAHRZEUGBREMSE ANLIEGENDEN BETÄTIGUNGSKRAFT**

METHOD FOR DETERMINING AN ACTUATING FORCE APPLIED TO A VEHICLE BRAKE THAT CAN BE ACTUATED HYDRAULICALLY AND MECHANICALLY

TECHNIQUE DE DÉTERMINATION D'UNE FORCE D'ACTIONNEMENT APPLIQUÉE SUR UN FREIN DE VÉHICULE À COMMANDE HYDRAULIQUE ET MÉCANIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.05.2011 DE 102011101062**

(43) Veröffentlichungstag der Anmeldung:
**19.03.2014 Patentblatt 2014/12**

(73) Patentinhaber: **Lucas Automotive GmbH
56070 Koblenz (DE)**

(72) Erfinder: **KNECHTGES, Josef
56727 Mayen (DE)**

(74) Vertreter: **Röthinger, Rainer
Wuesthoff & Wuesthoff
Patentanwälte PartG mbB
Schweigerstrasse 2
81541 München (DE)**

(56) Entgegenhaltungen:
**WO-A1-2007/036357     DE-A1-102008 012 338
DE-A1-102009 028 505**

EP 2 707 263 B1

**Beschreibung**

**Technisches Gebiet**

Die vorliegende Erfindung betrifft die Ermittlung einer an einer Fahrzeugbremse anliegenden Betätigungskraft. Die Erfindung betrifft insbesondere eine hydraulisch und mechanisch betätigbare Fahrzeugbremse sowie die Ermittlung der bei gemeinsamer hydraulischer und mechanischer Betätigung erzeugten Betätigungskraft.

**Hintergrund**

Hydraulische Fahrzeugbremsanlagen werden immer öfter mit einer elektrischen Parkbremse (EPB) ausgerüstet. Eine derartige Bremsanlage ist aus DE 197 32 168 C2 bekannt und umfasst einen elektrischen Antriebsmotor, eine Getriebeeinrichtung und ein Betätigungsglied in Form einer Mutter/Spindel-Anordnung. Letztere ist dazu vorgesehen, einen mit der Mutter/Spindel-Anordnung in Kontakt stehenden Hydraulikkolben der hydraulischen Fahrzeugbremse translatorisch zu bewegen. Auf diese Weise kann der Hydraulikkolben mechanisch betätigt werden, ohne dass ein hydraulischer Druck am Hydraulikkolben aufgebaut werden muss. Die durch die Verschiebung des Hydraulikkolbens auf die Fahrzeugbremse ausgeübte Betätigungskraft wird hierbei direkt aus der Stromaufnahme des Antriebsmotors (d.h. kraftsensorlos) bestimmt. Ein Verfahren zum Einstellen der Klemmkraft einer hydraulisch unterstützten elektromotorischen Feststellbremse ist ferner aus DE 10 2009 028505 A1 bekannt.

Die Anwendungsmöglichkeiten der elektrischen Parkbremse beschränken sich nicht nur auf die Funktion einer Feststellbremse. Durch geeignete Steuer- und Regelmechanismen kann die elektrische Parkbremse zur Realisierung weiterer Sicherheits- und Komfort-Funktionen eingesetzt werden, wie beispielsweise eines Berganfahrhilfeassistenten ("Hill-hold"-Funktion) oder eines Notbremsassistenten. Die Realisierung solcher Funktionen setzt ein abgestimmtes Zusammenwirken von elektrischer Parkbremse und Hydraulikdruckerzeugung voraus. Dies erfordert wiederum eine koordinierte Überwachung und Steuerung beider Systeme.

Ferner kann es vorteilhaft sein, die elektrische Parkbremse während der Erzeugung einer Betätigungskraft (z.B. während eines Parkbremsvorgangs) hydraulisch zu unterstützen. Dies erfordert jedoch eine genaue Bestimmung und Überwachung der einzelnen Betätigungskraftanteile und der resultierenden Betätigungskraft, um die elektrische Parkbremse und einen Hydraulikdruckerzeuger entsprechend anzusteuern und um Fehlfunktionen beim Aufbau der Betätigungskraft zu vermeiden.

Kurzer Abriss

Der Erfindung liegt die Aufgabe zu Grunde, eine Technik zum zuverlässigen Ermitteln der an einer mechanisch und hydraulisch betätigbaren Fahrzeugbremse anliegenden Betätigungskraft bereitzustellen.

Gemäß einem Aspekt wird ein Verfahren zum Ermitteln einer an einer Fahrzeugbremse anliegenden Betätigungskraft bereitgestellt, wobei die Fahrzeugbremse mit einem elektromechanischen Bremsaktuator ausgestattet ist und wobei ein erster Betätigungskraftanteil durch Betätigung des elektromechanischen Bremsaktuators mechanisch und ein zweiter Betätigungskraftanteil durch Betätigung einer Hydraulikdruckquelle hydraulisch erzeugt wird, wobei das Verfahren die folgenden Schritte umfasst: Erfassen eines auf den elektromechanischen Bremsaktuator bezogenen und auf den ersten Betätigungskraftanteil hinweisenden ersten Parameters; Ermitteln eines auf den zweiten Betätigungskraftanteil hinweisenden zweiten Parameters aus einem Verlauf des erfassten ersten Parameters; und Ermitteln der an der Fahrzeugbremse anliegenden Betätigungskraft aus dem ersten und dem zweiten Parameter.

Der elektromechanische Bremsaktuator kann zur Realisierung einer Parkbremsfunktion, eines Notbremsassistenten, eines Berganfahrhilfeassistenten und/oder weiterer Bremsfunktionen eingesetzt werden. Das Verfahren kann daher zur Betätigungskraftermittlung im Rahmen einer dieser Funktionen durchgeführt werden.

Der erste Parameter wird während der Betätigung des elektromechanischen Bremsaktuator erfasst. Der erste Parameter kann der elektrischen Stromaufnahme oder einem anderen Parameter eines dem elektromechanischen Bremsaktuators zugeordneten Elektromotors entsprechen. Beispielsweise kann die effektive Stromaufnahme ermittelt werden. Mit effektiver Stromaufnahme ist die Stromaufnahme des Elektromotors im belasteten Zustand abzüglich des Leerlaufstroms gemeint. Der Elektromotor befindet sich im belasteten Zustand, wenn ein dem elektromechanischen Bremsaktuator zugeordnetes Betätigungsglied einen der Fahrzeugbremse zugeordneten Hydraulikkolben translatorisch bewegt.

Alternativ hierzu kann der erste Parameter auch aus dem während des Betätigungsvorgangs zurückgelegten Betätigungsweges des Betätigungsgliedes ermittelt werden. In diesem Fall kann aus dem erfassten Betätigungsweg und einer (z. B. vorab gespeicherten) Information über die Bremsensteifigkeit die Betätigungskraft ermittelt werden.

Der zweite Parameter, welcher auf den durch die Hydraulikdruckquelle aufgebauten zweiten Betätigungskraftanteil hinweist, kann aus dem zeitlichen Verlauf der erfassten elektrischen Stromaufnahme des elektromechanischen Bremsaktuators ermittelt werden. Aus dem zeitlichen Verlauf der Stromaufnahme kann eine Motorleerlaufphase des Elektromotors während der Betätigung des elektromechanischen Bremsaktuators ermittelt werden. Die Motorleerlaufphase deutet auf eine lastfreie translatorische Bewegung eines Betätigungsgliedes hin. Eine lastfreie translatorische Bewegung des Betätigungsgliedes liegt beispielsweise dann vor, wenn das Betätigungsglied nicht mit einem Hydraulikkolben in Kontakt steht. Dies kann dann der Fall sein, wenn der Hydraulikkolben bezüglich des Betätigungsgliedes aufgrund eines zusätzlich angelegten Hydraulikdrucks räumlich verschoben wurde.

Der zweite Parameter kann der Zeitdauer der Motorleerlaufphase entsprechen. Alternativ hierzu kann der zweite Parameter einer integrierten Motordrehzahl während der Motorleerlaufphase entsprechen. Die integrierte Motordrehzahl kann aus einer vorab gespeicherten Leerlaufmotordrehzahl und der Zeitdauer der Motorleerlaufphase oder mittels eines Stromripple-Zählers bestimmt werden. In beiden Fällen ist der ermittelte zweite Parameter ein Maß für den durch das Betätigungsglied lastfrei zurückgelegten Betätigungsweg.

Der zweite Parameter kann zum Ermitteln des zweiten Betätigungskraftanteils herangezogen werden. Der zweite Betätigungskraftanteil kann hierbei aus dem ermittelten zweiten Parameter und einer bekannten Bremsensteifigkeit mit Hilfe eines Modells ermittelt werden. Ferner können weitere bekannte Bremsaktuator-Kenngrößen (wie beispielsweise das Untersetzungsverhältnis zwischen Elektromotor und Betätigungsglied) in das Modell mit eingehen.

Der an der Fahrzeugbremse erzeugte erste Betätigungskraftanteil und zweite Betätigungskraftanteil kann jeweils während wenigstens einer oder mehrerer Betätigungsphasen erzeugt werden. Bei Vorliegen mehrere Betätigungsphasen können der elektromechanische Bremsaktuator und die Hydraulikdruckquelle während wenigstens einer Betätigungsphase gleichzeitig betätigt werden, um eine Betätigungskraft aufzubauen.

Gemäß einer Ausführung kann der erste Betätigungskraftanteil und der zweite Betätigungskraftanteil in drei Betätigungsphasen erzeugt werden, wobei während der ersten Betätigungsphase der elektromechanische Bremsaktuator, während der zweiten Betätigungsphase die Hydraulikdruckquelle und während der dritten Betätigungsphase der elektromechanische Bremsaktuator und die Hydraulikdruckquelle gleichzeitig betätigt werden. Es ist aber auch denkbar, dass die Betätigungskraft in zwei aufeinanderfolgenden Betätigungsphasen erzeugt wird. Hierbei können die Hydraulikdruckquelle und der elektromechanische Bremsaktuator während der beiden Betätigungsphasen abwechselnd oder gleichzeitig betätigt werden.

Die bei gleichzeitiger Betätigung erzeugte Betätigungskraft kann zu ungefähr gleichen Teilen durch den elektromechanischen Bremsaktuator und die Hydraulikdruckquelle erzeugt werden. Es ist aber auch denkbar, dass bei gleichzeitiger Betätigung der Beitrag von Hydraulikdruckquelle und elektromechanischen Bremsaktuator zur Betätigungskraft verschieden ist. Beispielsweise kann der durch die Hydraulikdruckquelle oder durch den elektromechanischen Bremsaktuator erzeugte Anteil dominieren.

Wird während der ersten Betätigungsphase die an der Fahrzeugbremse angelegte Betätigungskraft durch alleinige Betätigung des elektromechanischen Bremsaktuators erzeugt, so wird beispielsweise eine Betätigungskraft erzeugt, welche zwischen 60 und 100 % der vom elektromechanischen Bremsaktuator maximal aufbringbaren Betätigungskraft entspricht.

Der zweite Betätigungskraftanteil kann zusätzlich (und unabhängig vom ermittelten zweiten Parameter) aus einer während der Betätigung der Hydraulikdruckquelle erfassten Stromaufnahme eines der Hydraulikdruckquelle zugeordneten Elektromotors ermittelt werden. Auf diese Weise kann der zweite Betätigungskraftanteil auf zwei unabhängige Weisen ermittelt werden. Der über die Stromaufnahme der Hydraulikdruckquelle ermittelte zweite Betätigungskraftanteil kann zur Plausibilitätsüberprüfung des über den zweiten Parameter ermittelbaren zweiten Betätigungskraftanteil herangezogen werden.

Gemäß einem weiteren Aspekt wird ein Computerprogrammprodukt mit Programmcode zum Durchführen des hier beschriebenen Verfahrens zur Verfügung gestellt, wenn das Computerprogrammprodukt auf einer Computereinrichtung ausgeführt wird. Eine solche Computereinrichtung kann ein elektronisches Steuergerät (electronic control unit, ECU) im Kraftfahrzeug umfassen.

Das Computerprogrammprodukt kann auf einem computerlesbaren Datenträger gespeichert sein. Beispielsweise kann das Computerprogrammprodukt auf einem entfernbaren Datenträger, wie beispielsweise einer Diskette, einer Festplatte, einer CD-ROM oder einer DVD, oder auf einem festen Datenträger, wie beispielsweise einem Halbleiterspeicher, gespeichert sein.

Gemäß einem weiteren Aspekt wird eine Vorrichtung zur Ermittlung einer an einer Fahrzeugbremse anliegenden Betätigungskraft bereitgestellt, wobei die Fahrzeugbremse mit einem elektromechanischen Bremsaktuator ausgestattet ist und wobei ein erster Anteil der Betätigungskraft durch Betätigung des elektromechanischen Bremsaktuators mechanisch und ein zweiter Anteil der Betätigungskraft durch Betätigung einer Hydraulikdruckquelle hydraulisch erzeugt wird, wobei die Vorrichtung folgende Komponenten umfasst: eine Einrichtung zum Erfassen eines auf den elektromechanischen Bremsaktuator bezogenen und auf den ersten Betätigungskraftanteil hinweisenden ersten Parameters, eine Einrichtung zum Ermitteln eines auf den zweiten Betätigungskraftanteil hinweisenden zweiten Parameters aus einem Verlauf des erfassten ersten Parameters, und eine Einrichtung zum Ermitteln der an der Fahrzeugbremse anliegenden Betätigungskraft aus dem ersten und zweiten Parameter. Die Vorrichtung kann ferner eine Vergleichseinrichtung umfassen, welche dazu vorgesehen ist, den aus dem zweiten Parameter ermittelbaren zweiten Betätigungskraftanteil mit einem aus einer Stromaufnahme der Hydraulikdruckquelle ermittelten zweiten Betätigungskraftanteil zu vergleichen.

Es wird ferner eine Kraftfahrzeugbremsanlage bereitgestellt, welche einen elektromechanischen Bremsaktuator, einen Hydraulikkreis mit Hydraulikdruckquelle, eine mit dem elektromechanischen Bremsaktuator und der Hydraulikdruckquelle gekoppelten Radbremse sowie die hier beschriebene Vorrichtung umfasst.

Kurze Beschreibung der Zeichnungen

Weitere Einzelheiten, Vorteile und Ausgestaltungen der Erfindung ergeben sich aus der nachfolgenden Beschreibung sowie aus den Figuren. Es zeigen:

Fig. 1 eine Fahrzeugbremsanlage gemäß einem Ausführungsbeispiel;

Fig. 2 eine Radbremse der Fahrzeugbremsanlage gemäß Fig. 1;

Fig. 3 eine schematische Darstellung einer Vorrichtung zur Bestimmung einer an der Radbremse anliegenden Betätigungskraft gemäß einem Ausführungsbeispiel der vorliegenden Erfindung; und

Fig. 4 ein Diagramm, das den zeitlichen Verlauf der erzeugten Betätigungskraft in Abhängigkeit der Betätigung eines elektromechanischen Bremsaktuators und einer Hydraulikdruckquelle der Fahrzeugbremsanlage zeigt.

Detaillierte Beschreibung

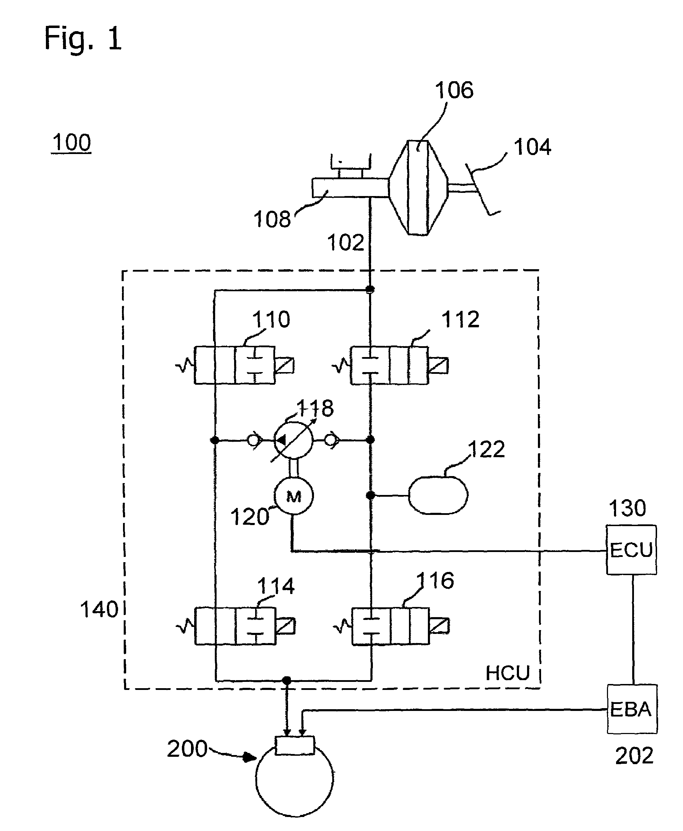

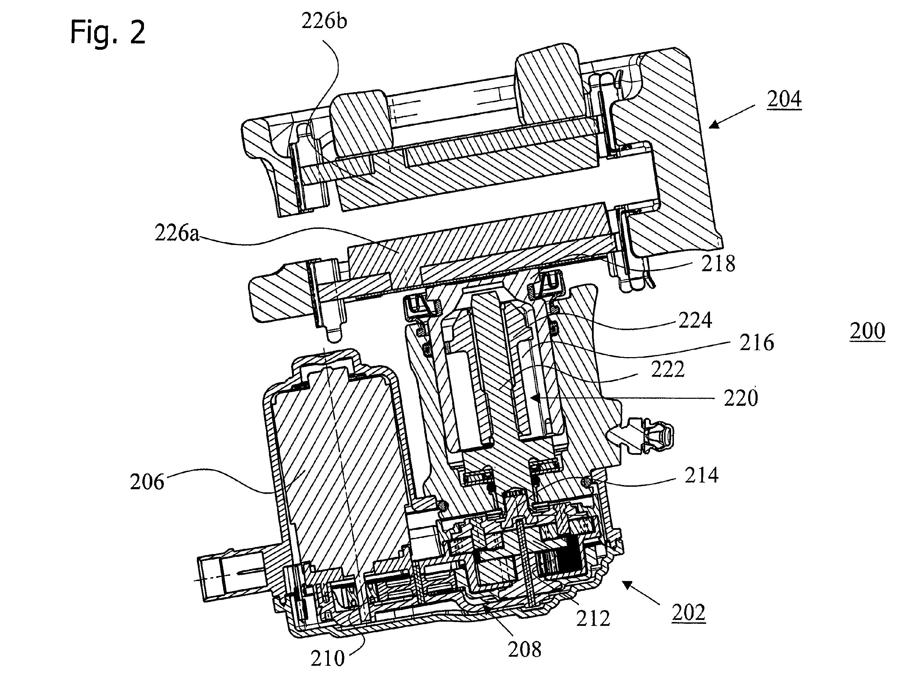

Anhand der Fign. 1 und 2 werden die Komponenten und die Funktionsweise eines Ausführungsbeispiels einer mit einer elektrischen Parkbremse (EPB) ausgestatteten hydraulischen Fahrzeugbremsanlage 100 näher beschrieben. Fig. 1 zeigt ein Blockdiagramm der Fahrzeugbremsanlage 100. Die Darstellung der Fahrzeugbremsanlage 100 beschränkt sich aus Symmetriegründen auf eine einzige Radbremse 200 und einen der Radbremse 200 zugeordneten Bremskreis 102.

Die Fahrzeugbremsanlage 100 umfasst ein Bremspedal 104, einen Bremskraftverstärker 106 und einen dem Bremskraftverstärker 106 nachgeschalteten Hauptzylinder 108, welcher ausgangsseitig mit dem Bremskreis 102 gekoppelt ist. Der Bremskreis 102 umfasst in bekannter Weise eine hydraulische Steuereinheit 140 (Hydraulic Control Unit, HCU) mit zwei Absperrventilen 110, 112, der Radbremse 200 zugeordneten ABS-Einlass- und ABS-Auslass-Ventilen 114, 116, einem Fluidreservoir 122, einer Hydraulikdruckquelle 118 in der Gestalt einer Hydraulikpumpe und einen der Hydraulikpumpe 118 zugeordneten Elektromotor 120.

Die Fahrzeugbremsanlage 100 umfasst ferner einen mit der Radbremse 200 mechanisch gekoppelten elektromechanischen Bremsaktuator 202 (Electromechanical Brake Actuator, EBA) sowie eine elektronische Steuereinheit 130 (Electronic Control Unit, ECU). Die elektronische Steuereinheit 130 umfasst alle elektronischen Komponenten und Software zur Ansteuerung der hydraulischen Steuereinheit 140 und des elektromechanischen Bremsaktuators 202. Die vorliegende Anordnung entspricht einer integrierten elektischen Parkbremse (EPBi), bei der alle elektronischen Komponenten und Software zur Ansteuerung des elektromechanischen Bremsaktuators 202 in der elektronischen Steuereinheit 130 integriert sind.

Im Rahmen einer Betriebsbremsung wird über den Hauptzylinder 108 ein fahrergesteuerter Hydraulikdruck p an der Radbremse 200 aufgebaut. Hierbei schaltet die hydraulische Steuereinheit 140 das Absperrventil 110 und das ABS-Einlass-Ventil 114 in eine Durchlass-Stellung sowie das Absperrventil 112 und das ABS-Auslass-Ventil 116 in eine Sperr-Stellung (wie in Fig. 1 gezeigt).

Ein Hydraulikdruck p kann ferner auch fahrerunabhängig erzeugt werden. In diesem Fall werden das Absperrventil 110 in eine Sperr-Stellung sowie das Absperrventil 112 und das ABS-Einlass-Ventil 114 in eine Durchlass-Stellung geschaltet und anschließend die Hydraulikpumpe 118 betätigt. Die Hydraulikpumpe 118 saugt dann eingangsseitig Hydraulikfluid an und pumpt ausgangsseitig das angesaugte Hydraulikfluid zur Radbremse 200. Mit anderen Worten wirkt die Hydraulikpumpe 118 als hydraulischer Aktuator, welcher die Radbremse 200 hydraulisch betätigt. Bei dem hier beschriebenen Hydraulikdruck-Aufbau bleibt das ABS-Auslass-Ventil 116 geschlossen.

Alternativ zur hier beschriebenen hydraulischen Betätigung kann die Radbremse 200 auch mittels des elektromechanischen Bremsaktuators 202 mechanisch betätigt werden, indem der elektromechanische Bremsaktuator 202 eine Betätigungskraft F auf die Radbremse 200 überträgt. Ferner ist es möglich, die an der Radbremse 200 zu erzeugende Betätigungskraft F durch gemeinsames Betätigen von elektromechanischem Bremsaktuator 202 und Hydraulikdruckquelle 118 zu erzeugen.

Anhand von Fig. 2 werden nun die Komponenten sowie die hydraulische und mechanische Betätigung der Radbremse 200 von Fig. 1 genauer beschrieben.

Fig. 2 zeigt einen Querschnitt der Radbremse 200, welche eine Bremsscheibe (in Fig. 2 nicht dargestellt), einen die Bremsscheibe umgreifenden U-förmigen Bremssattel 204, einen in einer Hydraulikkammer 216 der Radbremse 200 aufgenommen Hydraulikkolben 218 und den mit dem Hydraulikkolben 218 mechanisch gekoppelten elektromechanischen Bremsaktuator 202 umfasst.

Bei hydraulischer Betätigung der Radbremse 200 strömt Hydraulikfluid in die Hydraulikkammer 216. Durch das einströmende Hydraulikfluid wird am Hydraulikolben 218 ein Hydraulikdruck p aufgebaut, wodurch der Hydraulikolben 218 translatorisch verschoben wird. Die translatorische Bewegung des Hydraulikkolbens 218 wird auf die an der Innenseite des Bremssattels 204 angeordneten Bremsbeläge 226a, 226b übertragen. Diese werden gegen die Bremsscheibe gedrückt, wodurch eine Betätigungskraft (Zuspannkraft) an der Bremsscheibe erzeugt wird, welche proportional zum am Hydraulikolben 218 anliegenden Hydraulikdruck p ist.

Der Hydraulikkolben 218 ist zur Aufnahme eines Betätigungsliedes 220 des elektromechanischen Bremsaktuators 202 hohl ausgebildet. Das Betätigungsglied 220 ist im vorliegenden Ausführungsbeispiel als Mutter/Spindel-Anordnung 222, 224 ausgestaltet und mit einem Abtriebszapfen 214 einer Getriebeeinheit 208 des elektromechanischen Bremsaktuators 202 drehfest verbunden. Die Getriebeeinheit 208 ist antriebsseitig mit einem Elektromotor 206 drehfest gekoppelt und dazu vorgesehen, die am Elektromotor 206 erzeugte Drehbewegung zu untersetzen und auf den Abtriebszapfen 214 zu übertragen. Die am Abtriebszapfen 214 abgegebene Drehbewegung wird durch die Mutter/Spindel-Anordnung 222, 224 in eine zur Drehbewegung proportionale translatorische Bewegung der Mutter 224 umgewandelt. Die Mutter 224 überträgt die translatorische Bewegung auf den Hydraulikkolben 218. Je nach Umlaufsinn der Spindel 222 bewegt sich die Mutter 224 in Richtung des Hydraulikkolbens 218 oder in entgegengesetzte Richtung und bewirkt somit ein Vorspannen bzw. Lösen der Radbremse.

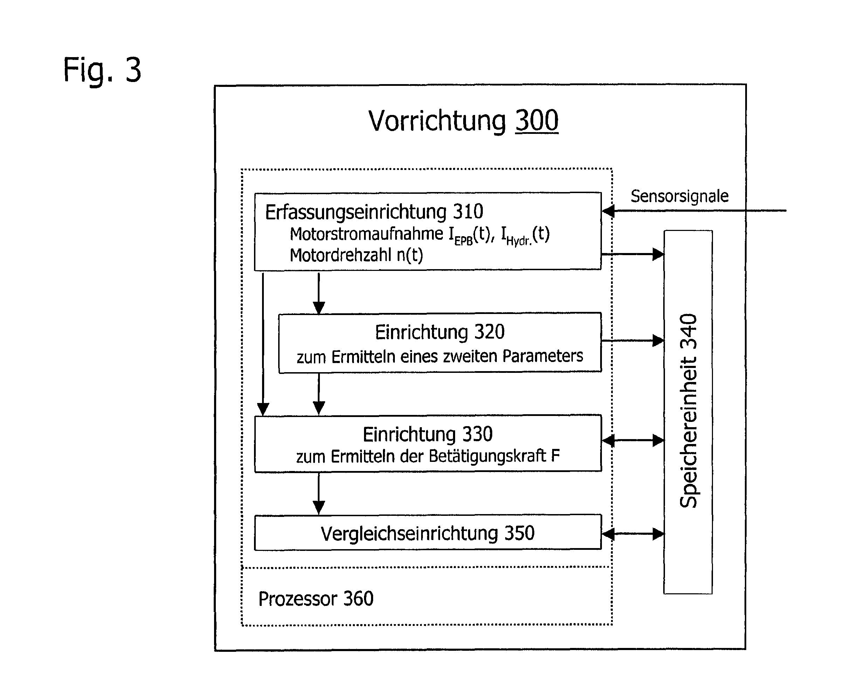

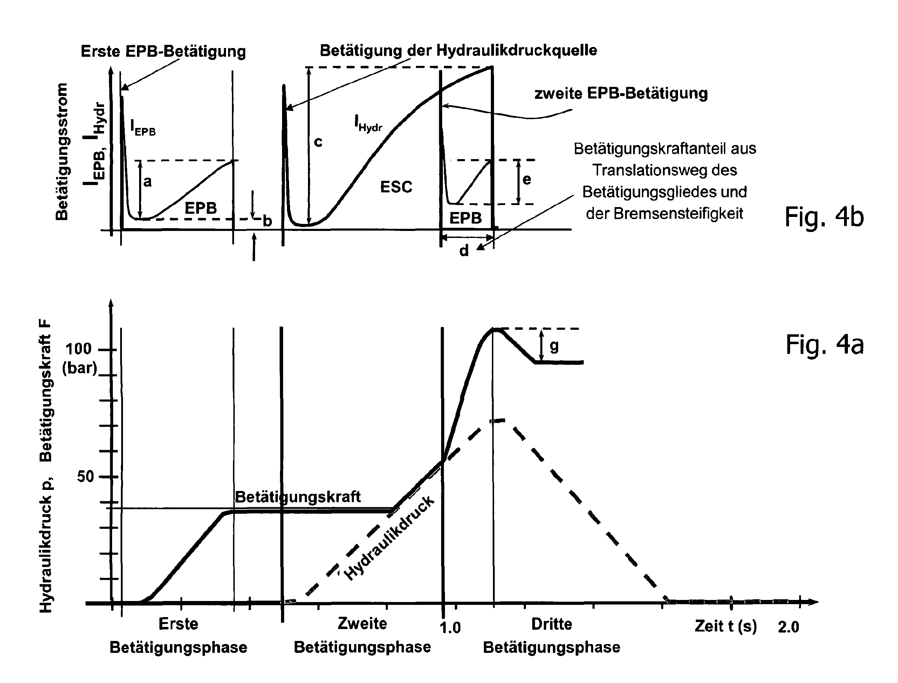

Mit Bezug auf die Fign. 3 und 4 werden nun eine Vorrichtung 300 und ein Verfahren zum Bestimmen einer durch Betätigung des elektromechanischen Bremsaktuators 202 und der Hydraulikpumpe 118 erzeugten Betätigungskraft F im Rahmen eines Feststellbremsvorgangs näher erläutert. Es versteht sich, dass das hier beschriebene Verfahren nicht auf einen Feststellbremsvorgang beschränkt ist. Es ist vielmehr auf jede Bremsfunktion anwendbar, bei welcher eine Betätigungskraft F gemeinsam (aber ggf. zeitlich getrennt) vom elektromechanischen Bremsaktuator 202 und der Hydraulikpumpe 118 erzeugt wird.

Die Vorrichtung 300 umfasst eine Einrichtung 310 zum Erfassen eines ersten Parameters im Zusammenhang mit dem elektromechanischen Bremsaktuators 202, eine Einrichtung 320 zum Ermitteln eines zweiten Parameters auf der Grundlage des ersten Parameters, eine Einrichtung 330 zum Ermitteln der Betätigungskraft F, eine Speichereinheit 340 und einen Prozessor 360. Die Vorrichtung 300 umfasst ferner eine Vergleichseinrichtung 350. Der Prozessor 360 koordiniert und steuert die Abläufe zwischen den einzelnen miteinander in Verbindung stehenden Einrichtungen. Die Vorrichtung 300 kann als eigenständige Einheit oder als integrierter Bestandteil der elektronischen Steuereinheit 130 ausgebildet sein.

Die Erfassungseinrichtung 310 ist dazu ausgebildet, die Stromaufnahme $I_{EPB}$ des Elektromotors 206 während der Betätigung des elektromechanischen Bremsaktuators 202 in Abhängigkeit der Betätigungszeit t zu erfassen. Hierfür ist die Einrichtung 310 mit einem Motorstromsensor zur Messung des Motorstroms verbunden. Alternativ hierzu kann auch der durch die elektronische Steuereinheit 130 bereitgestellte Steuerstrom für den Elektromotor 206 der Erfassungseinrichtung 310 signalisiert werden. Die Erfassungseinrichtung 310 erfasst die Stromaufnahmewerte $I_{EPB}$ kontinuierlich oder in vorgegebenen Zeitintervallen. Die Erfassungseinrichtung 310 erfasst ferner die Motordrehzahl n(t) des Elektromotors 206 in Abhängigkeit der Betätigungszeit t (z. B. auf der Grundlage von Stromrippeln). Zudem ist die Erfassungseinrichtung 310 dazu ausgebildet, eine Stromaufnahme $I_{Hydr}$ des Elektromotors 120 der Hydraulikpumpe 118 und/oder die Pumpendrehzahl und Pumpenhübe der Hydraulikpumpe 118 zu erfassen. Die Einrichtung 310 steht mit der Speichereinheit 340 und den Einrichtungen 320, 330 in kommunikativer Verbindung. Sie übergibt die erfassten Messwerte der Speichereinheit 340 und/oder direkt den Einrichtungen 320, 330 zur weiteren Verarbeitung.

Die Einrichtung 320 zum Ermitteln des zweiten Parameters ist dazu ausgelegt, den Verlauf der erfassten Stromaufnahmewerte $I_{EPB}$ in Abhängigkeit der Betätigungszeit t zu analysieren. Sie ist ferner dazu ausgelegt, aus dem zeitlichen Verlauf der Stromaufnahme $I_{EPB}$ des Bremsaktuators 202 eine Motorleerlaufzeit T zu ermitteln. Wird die Einrichtung 320 mit erfassten Motordrehzahlwerten n(t) oder einer vorab gespeicherten Leerlaufmotordrehzahl gespeist, so ermittelt die Einrichtung 320 zusätzlich eine der Motorleerlaufzeit T entsprechende integrierte Motordrehzahl N. Die Einrichtung 320 kann ferner aus den erfassten Motordrehzahlwerten n(t) eine der vollständigen Betätigung entsprechende integrierte Gesamtmotordrehzahl $N_{ges}$ ermitteln. Die Einrichtung 320 übergibt die ermittelten Werte der Speichereinheit 340 und/oder der Einrichtung 330.

Die Einrichtung 330 zur Ermittlung der Betätigungskraft F ist dazu ausgebildet, auf Basis der erfassten Motorstromaufnahme $I_{EPB}$ und der ermittelten Motorleerlaufzeit T und/oder der integrierten Motordrehzahl N eine an der Radbremse 200 erzeugte (resultierende) Betätigungskraft F zu ermitteln. Die Einrichtung 330 ermittelt hierbei den Betätigungskraftanteil $F_{EPB}$ des elektromechanischen Bremsaktuator 202 aus einer Stromdifferenz $\Delta I_{EPB}$ zwischen einem minimalen und maximalen Stromaufnahmewert.

Ferner ermittelt die Einrichtung 330 aus der in der Einrichtung 320 bestimmten Motorleerlaufzeit T, der integrierten Motordrehzahl N oder der integrierten Gesamtmotordrehzahl $N_{ges}$ mittels einer vorab gespeicherten Zuordnungstabelle den korrespondierenden Betätigungsweg der Mutter 224 und/oder den hydraulischen Betätigungskraftanteil $F_{Hydr}$. Die Zuordnungstabelle stellt hierbei eine eindeutige Beziehung zwischen der Motorleerlaufzeit T und/oder der Motordrehzahl N sowie dem Betätigungsweg der Mutter 224 und der Betätigungskraft F her. Alternativ hierzu kann die Einrichtung 330 mittels eines Modells und vorab gespeicherter Werte zur Getriebeuntersetzung den Betätigungsweg der Mutter 224 während der Motorleerlaufzeit T berechnen. Hieraus wird dann mit Hilfe vorab gespeicherter Bremsensteifigkeitswerte der hydraulische Betätigungskraftanteil $F_{Hydr}$ ermittelt. Die Betätigungskraft F wird dann aus der Superposition (Addition) beider Kraftanteile $F_{EPB}$, $F_{Hydr}$ erermittelt.

Die Einrichtung 330 ist auch dazu vorgesehen, den hydraulisch erzeugten Betätigungskraftanteil $F_{Hydr}$ aus den erfassten Motorstromwerten $I_{Hydr}$ der Hydraulikpumpe 118 oder über Modellrechung aus der erfassten Pumpendrehzahl und Pumpenhübe (unabhängig von der Motorstromaufnahme des Bremsaktuator 202) zu bestimmen.

Die Speichereinheit 340 ist dazu ausgebildet, die erfassten Messwerte zwischenzuspeichern und den Einrichtungen 330, 350 bei Bedarf zur Verfügung zu stellen. Ferner ist die Speichereinheit 340 dazu vorgesehen ermittelte Betätigungskräfte F bzw. Betätigungskraftanteile $F_{EPB}$, $F_{Hydr}$ sowie bremsenspezifische und für die Bestimmung der Betätigungskraft F relevante Parameter, wie beispielsweise das Untersetzungsverhältnis des Getriebes 208 oder die Bremsensteifigkeit, abzuspeichern und bei Bedarf den Einrichtungen 330, 350 zur Verfügung zu stellen.

Die Vergleicheinrichtung 350 ist dazu ausgebildet, den durch die Einrichtung 330 auf Basis der Motorleerlaufzeit T und/oder der integrierten Motordrehzahl N ermittelten hydraulischen Betätigungskraftanteil $F_{Hydr}$ mit dem über die Stromaufnahme $I_{Hydr}$ der Hydraulikpumpe 118 ermittelten hydraulischen Betätigungskraftanteil $F_{Hydr}$ zu vergleichen und Abweichungen zwischen den beiden ermittelten Werten zu erkennen. Überschreiten die Abweichungen einen vorgegebenen Toleranzwert, wird dem Fahrer ein Fehlersignal ausgegeben, welches auf eine fehlerhafte Ermittlung der Betätigungskraft F hinweist.

Anhand von Fig. 4a und Fig. 4b wird nun am Beispiel eines Feststellbremsvorgang die zeitliche Betätigung von Hydraulikpumpe 118 und elektromechanischen Bremsaktuator 202 zur gemeinsamen Erzeugung einer Feststellbremskraft sowie die Ermittlung derselben näher beschrieben.

Fig. 4a zeigt ein Druck/Betätigungskraft-Zeit-Diagramm, in welchem der durch die Hydraulikpumpe 118 erzeugte Hydraulikdruck (gestrichelte Linie) sowie die durch gemeinsame Betätigung von Hydraulikpumpe 118 und elektromechanischem Bremsaktuator erzeugte Betätigungskraft F (durchgezogene Linie) in Abhängigkeit der Betätigungszeit t aufgetragen sind. Fig. 4b zeigt in einem Strom-Zeit-Diagramm die Stromaufnahme $I_{EPB}$, $I_{Hydr}$ der Elektromotoren 118, 206 in Abhängigkeit der Betätigungszeit t.

Der Aufbau der Betätigungskraft erfolgt in drei Betätigungsphasen. Während einer ersten Betätigungsphase wird zunächst durch Betätigen des elektromechanischen Bremsaktuators 202 (vgl. erste EPB-Betätigung in Fig. 4b) eine Betätigungskraft ($F=F_{EPB}$) an der Radbremse 200 mechanisch erzeugt. Die Betätigungskraft F beträgt hierbei in der Regel mehr als 70 % der vom elektromechanischen Bremsaktuator 202 maximal aufbringbaren Betätigungskraft. Daraufhin wird der elektromechanische Bremsaktuator 202 ausgeschaltet (im vorliegenden Beispiel nach ungefähr 0.4 sec), wobei die erzeugte Betätigungskraft durch die selbsthemmende Wirkung der Spindel/Mutter-Anordnung 222, 224 gehalten wird (vgl. Bereich in Fig. 4a, in dem die Betätigungskraft-Zeit-Kurve horizontal verläuft).

Die Bestimmung der während der ersten Betätigungsphase erzeugten Betätigungkraft (F) erfolgt mit Hilfe der erfassten Stromaufnahme $I_{EPB}$ des Bremsaktuators 202. Wie in Fig. 4b verdeutlicht ist, weist die Stromaufnahme-Kennlinie eine anfänglich stark abfallende Flanke auf, gefolgt von einem Umkehrpunkt und einem Bereich, in dem der Strom mit zunehmender Betätigungszeit t monoton wieder ansteigt bis der Bremsaktuator 202 abgeschaltet wird. Dieser Bereich wachsender Stromaufnahme korreliert mit der an der Radbremse 200 erzeugten Betätigungskraft (vgl. Diagramme der Fign. 4a und 4b für die erste Betätigungsphase). Die Höhe der Stromaufnahme spiegelt den Betrag der erzeugten Betätigungskraft F wieder.

Aus der Stromdifferenz $\Delta I_{EPB}$ zwischen der erfassten maximalen Stromaufnahme am Ende der Betätigung und einer minimalen Stromaufnahme (dieser kann der Leerlaufstromaufnahme entsprechen) ermittelt die Ermittlungseinheit 330 die effektive, durch den Bremsaktuator 202 erzeugte Betätigungskraft (Betrag "a" in Fig. 4b). Durch die Differenzbildung wird ein dem Leerlaufstrom des elektromechanischen Bremsaktuators geschuldeter Messfehler (Betrag "b" in Fig. 4b) eliminiert. Die anfängliche hohe Stromaufnahme hängt mit dem Anfahren des Elektromotors zusammen und ist für die Bestimmung der Betätigungskraft nicht relevant.

In einer darauffolgenden zweiten Betätigungsphase wird die Hydraulikpumpe 118 betätigt, während der elektromechanische Bremsaktuator 202 ausgeschaltet bleibt. Die Hydraulikpumpe 118 pumpt Hydraulikfluid in die Hydraulikkammer 216. Dabei steigt der Hydraulikdruck in der Hydraulikkammer 216 kontinuierlich an, bis der Hydraulikdruck p den bereits eingestellten Kolbendruck (der Kolbendruck entspricht der durch das Betätigungsglied 220 ausgeübten Kraft normiert auf die Kolbenfläche) erreicht. Schließlich übersteigt der erzeugte Hydraulikdruck p den mechanisch erzeugten Kolbendruck, sodass der Hydraulikkolben 218 weiter in Richtung der Bremssattels 204 bewegt wird. Die in der ersten Betätigungsphase erzeugte Betätigungskraft wird somit hydraulisch weiter erhöht. Der Betätigungskraftanstieg ist hierbei direkt proportional zum erzeugten Hydraulikdruck p, wie in Fig. 4a durch die Überlagerung der beiden Kurven verdeutlicht ist.

Die hydraulische Verschiebung des Hydraulikkolbens 218 bewirkt zusätzlich eine räumliche Trennung zwischen dem Hydraulikkolben 218 einerseits und der Mutter 224 andererseits. Das bedeutet, dass am Ende der zweiten Betätigungsphase die Mutter/Spindel-Anordnung 222, 224 lastfrei ist und die gesamt anliegende Betätigungskraft F aus dem am Hydraulikkolben 218 anliegenden Hydraulikdruck p resultiert.

Während der Betätigung der Hydraulikpumpe 118 erfasst die Erfassungseinrichtung 310 die Stromaufnahme $I_{Hydr}$ der Hydraulikpumpe 118. Der entsprechend erfasst Stromverlauf ist schematisch in Fig. 4b (mittleres Diagramm) dargestellt. Die Stromcharakteristik entspricht dabei im Wesentlichen der oben beschriebenen Stromcharakteristik für den elektromechanischen Bremsaktuators 202. Insbesondere ermittelt die Einrichtung 330 aus der Stromdifferenz $\Delta I_{Hydr}$ zwischen einer maximalen und minimalen Stromaufnahme den durch die Hydraulikpumpe 118 aufgebauten Betätigungskraftanteil (vgl. Fig. 4b). Im hier beschriebenen Ausführungsbeispiel ist zu beachten, dass die Hydraulikpumpe 118 während der zweiten und anfänglich während einer anschließenden dritten Betätigungsphase aktiviert ist, und dass die erfasste Stromdifferenz $\Delta I_{Hydr}$ dem hydraulischen Betätigungskraftanteil entspricht, welcher während der zweiten und dritten Betätigungsphase aufgebaut worden ist.

In der nachfolgenden dritten Betätigungsphase wird der elektromechanische Bremsaktuator 202 zusammen mit der Hydraulikpumpe 118 ein zweites Mal betätigt (vgl. zweite EPB-Betätigung in Fig. 4b). Auf diese Weise wird die während der ersten beiden Phasen erzeugte Betätigungskraft F durch gleichzeitiges Betätigen beider Aktuatoren 118, 202 noch weiter erhöht. Ist eine bestimmte Betätigungskraft (vorgegebener Betätigungskraft-Sollwert) erreicht, so werden die beiden Aktuatoren 118, 202 ausgeschaltet. Dabei wird der Hydraulikdruck p in der Hydraulikkammer 216 kontinuierlich abgebaut (vgl. abfallende Flanke in Fig. 4a). Die erzeugte Betätigungskraft F bleibt aber aufgrund der vorgerückten Position der Mutter 222 im Wesentlichen erhalten. Geringe Betätigungskraftverluste (vgl. Betrag "g" in Fig. 4a) können jedoch beim Arretieren des Hydraulikkolbens 218 durch die Mutter/Spindel-Anordnung 222, 224 auftreten (z. B. durch Setzeffekte).

Die Betätigungskrafterhöhung in der dritten Betätigungsphase ist das Resultat einer Überlagerung von mechanisch und hydraulisch erzeugten Betätigungskräften. Wie aus Fig. 4a ersichtlich ist, wächst während der dritten Phase die resultierende Betätigungskraft F überproportional mit der Hydraulikdruckzunahme, was vom zusätzlich erzeugten mechanischen Anteil der Betätigungskraft F herrührt. Es ist dabei zu beachten, dass durch das Freiwerden des Hydraulikkolbens von der Mutter/Spindel-Anordnung während der zweiten Betätigungsphase der Bremsaktuator 202 erneut die volle Betätigungskraft $F_{EPB}$ aufbringen kann.

Um eine Betätigungskrafterhöhung auf Basis der gleichzeitigen Betätigung von Hydraulikpumpe 118 und Bremsaktuator 202 zu realisieren, können die beiden Aktuatoren 118, 202 derart angesteuert werden, dass beide Aktuatoren in etwa dieselbe Betätigungskraft-Anstiegsrate aufweisen. Dies erfordert eine erhöhte Förderleistung der Hydraulikpumpe 118, um das durch das Betätigungsglied 220 zusätzlich vergrößerte Volumen der Hydraulikdruckkammer 216 mit Hydraulikfluid nachzufüllen. Nur auf diese Weise kann ein plötzliches Absinken oder Stagnieren des Hydraulikdrucks in der Hydraulikkammer 216 verhindert werden.

Während der dritten Betätigungsphase erfasst die Erfassungseinrichtung 310 (parallel zur Stromaufnahme $I_{Hydr}$ der Hydraulikpumpe 118) erneut die Stromaufnahme $I_{EPB}$ des Bremsaktuators 202. Aus der Stromdifferenz $\Delta I_{EPB}$ des elektromechanischen Bremsaktuators 202 ermittelt die Einrichtung 330 die effektive, durch den Bremsaktuator 202 erzeugte, Betätigungskraft (Betrag "e" in Fig. 4b) während der dritten Betätigungsphase. Die Summe aus den Beträgen "a" und "e" ergibt dann den durch den Bremsaktuator 202 während der ersten und dritten Betätigungsphase mechanisch erzeugten Betätigungskraftanteil $F_{EPB}$.

Den während der dritten Betätigungsphase durch die Hydraulikpumpe 118 effektiv erzeugten Betätigungskraftanteil $F_{Hydr}$ ermittelt die Einrichtung 330 mit Hilfe der integrierten Gesamtmotordrehzahl $N_{ges}$ und der bereits oben erwähnten vorab gespeicherten Zuordnungstabelle zur Bestimmung des Betätigungsweges der Mutter 224 und des dazu korrespondierenden Betätigungskraftanteils. Es sei darauf verwiesen, dass im vorliegenden Beispiel der dem Betätigungsweg der Mutter 224 korrespondierende Betätigungskraftanteil (vgl. Betrag "d", welcher in Fig. 4b den Betätigungskraftanteil und nicht den Betätigungsweg der Mutter 224 symbolisiert) dem während der zweiten und dritten Betätigungsphase effektiv erzeugten hydraulischen Betätigungskraftanteil $F_{Hydr}$ und dem in der dritten Betätigungsphase zusätzlich erzeugten mechanischen Betätigungskraftanteil "e" entspricht. Der effektive hydraulische Betätigungskraftanteil $F_{Hydr}$ ergibt sich dann aus der Differenz der Beträge "d" und "e". Die resultierende Betätigungskraft F ergibt sich unter zusätzlicher Berücksichtigung auftretender Betätigungskraftverluste durch Setzeffekte aus der Überlagerung der beiden Kraftanteile gemäß der Beziehung

$$F = F_{EPB} + F_{Hydr} - F_{setz} = (a + e) + (d - e) - g = a + d - g.$$

Das hier beschriebene Verfahren ermöglicht somit die Bestimmung der resultierenden Betätigungskraft F und der durch den elektromechanischen Bremsaktuator 202 und die Hydraulikdruckquelle 118 erzeugten Betätigungskraftanteile $F_{EPB}$, $F_{Hydr}$ allein auf Basis von sich auf den elektromechanischen Bremsaktuator 202 beziehende Messgrößen (Messgrößen, die sich auf die Hydraulikdruckquelle beziehen, werden für die Bestimmung nicht benötigt).

Wie bereits oben ausgeführt, kann die Einrichtung 330 die hydraulische Betätigungskraft zusätzlich aus der Stromaufnahme der Hydraulikpumpe 118 ermitteln. Für das in den Fign. 4a und 4b gezeigte Ausführungsbeispiel entspricht der aus der Stromaufnahme der Hydraulikpumpe 118 ermittelte Betätigungskraftanteil (vgl. Betrag "c" in Fig. 4b) der durch die Hydraulikpumpe 118 erzeugten effektiven hydraulischen Betätigungskraft $F_{Hydr}$ und dem während der ersten Betätigungsphase mechanisch erzeugten Anteil "a".

Die Einrichtung 330 kann somit den hydraulischen Betätigungskraftanteil $F_{Hydr}$ auf zwei unterschiedliche Weisen ermitteln. Die unterschiedlich ermittelten Werte für den hydraulischen Betätigungskraftanteil $F_{Hydr}$ können mittels der Vergleichseinrichtung 350 miteinander verglichen und auf ihre Plausibilität hin geprüft werden. Auf diese Weise können Fehler beim Ermitteln der durch die Hydraulikpumpe und den elektromechanischen Bremsaktuator aufgebauten Betätigungskraft erkannt und vermieden werden.

## Patentansprüche

1. Verfahren zum Ermitteln einer an einer Fahrzeugbremse (200) anliegenden Betätigungskraft, wobei die Fahrzeugbremse (200) mit einem elektromechanischen Bremsaktuator (202) ausgestattet ist und wobei ein erster Betätigungskraftanteil durch Betätigung des elektromechanischen Bremsaktuators (202) mechanisch und ein zweiter Betätigungskraftanteil durch Betätigung einer Hydraulikdruckquelle (118) hydraulisch erzeugt wird, folgende Schritte umfassend:

   - Erfassen eines auf den elektromechanischen Bremsaktuator (202) bezogenen und auf den ersten Betätigungskraftanteil hinweisenden ersten Parameters;
   - Ermitteln eines auf den zweiten Betätigungskraftanteil hinweisenden zweiten Parameters aus einem Verlauf des erfassten ersten Parameters; und
   - Ermitteln der an der Fahrzeugbremse (202) anliegenden Betätigungskraft aus dem ersten und dem zweiten Parameter.

2. Verfahren nach Anspruch 1, wobei der erste Parameter während der Betätigung des elektromechanischen Bremsaktuators (202) erfasst wird und einer elektrischen Stromaufnahme eines dem elektromechanischen Bremsaktuator (202) zugeordneten Elektromotors (206) entspricht.

3. Verfahren nach Anspruch 2, wobei der zweite Parameter aus dem zeitlichen Verlauf der elektrischen Stromaufnahme bestimmt wird.

4. Verfahren nach Anspruch 3, wobei der zweite Parameter auf eine Motorleerlaufphase des Elektromotors (206) hinweist
und dabei vorzugsweise einer Zeitdauer der Motorleerlaufphase oder einer integrierten Motordrehzahl während der Motorleerlaufphase entspricht.

5. Verfahren nach einem der vorhergehenden Ansprüche, wobei der zweite Betätigungskraftanteil aus dem zweiten Parameter und einer Bremsensteifigkeit bestimmt wird.

6. Verfahren nach einem der vorhergehenden Ansprüche, wobei der erste Betätigungskraftanteil und der zweite Betätigungskraftanteil während einer oder mehrerer Betätigungsphasen erzeugt werden.

7. Verfahren nach Anspruch 6, wobei während wenigstens einer Betätigungsphase der elektromechanische Bremsaktuator (202) und die Hydraulikdruckquelle (118) gleichzeitig betätigt werden.

8. Verfahren nach einem der Ansprüche 1 bis 5, wobei der erste Betätigungskraftanteil und der zweite Betätigungskraftanteil in drei Betätigungsphasen erzeugt werden, wobei während der ersten Betätigungsphase der elektromechanische Bremsaktuator (202), während der zweiten Betätigungsphase die Hydraulikdruckquelle (118) und während der dritten Betätigungsphase der elektromechanische Bremsaktuator (202) und die Hydraulikdruckquelle (118) gleichzeitig betätigt werden.

9. Verfahren nach Anspruch 7 oder 8, wobei der bei gleichzeitiger Betätigung erzeugte Kraftanteil zu ungefähr gleichen Teilen durch den elektromechanischen Bremsaktuator (202) und die Hydraulikdruckquelle (118) erzeugt wird.

10. Verfahren nach Anspruch 8, wobei die während des ersten Betätigungsvorgangs angelegte Betätigungskraft mehr als 60 % der vom elektromechanischen Bremsaktuator (202) maximal aufbringbaren Betätigungskraft beträgt.

11. Verfahren nach einem der vorhergehenden Ansprüche, wobei der zweite Betätigungskraftanteil zusätzlich aus einer während der Betätigung der Hydraulikdruckquelle (118) erfassten Stromaufnahme eines der Hydraulikdruckquelle (118) zugeordneten Elektromotors (120) bestimmt wird, und wobei vorzugsweise der aus der Stromaufnahme des der Hydraulikdruckquelle (118) zugeordneten Elektromotors (120) bestimmte zweite Betätigungskraftanteil zur Plausibilisierung mit dem aus dem zweiten Parameter ermittelten zweiten Betätigungskraftanteil verglichen wird.

12. Verfahren nach einem der vorhergehenden Ansprüche, wobei das Verfahren zur Betätigungskraftermittlung im Rahmen eines Parkbremsvorgangs durchgeführt wird.

13. Computerprogrammprodukt mit Programmcode zum Durchführen des Verfahrens nach wenigstens einem der vorhergehenden Ansprüche, wenn das Computerprogrammprodukt auf einer Computereinrichtung ausgeführt wird.

14. Computerprogrammprodukt nach Anspruch 13, welches auf einem computerlesbaren Aufzeichnungsmedium abgespeichert ist.

15. Vorrichtung (300) zur Ermittlung einer an einer Fahrzeugbremse anliegenden Betätigungskraft, wobei die Fahrzeugbremse (200) mit einem elektromechanischen Bremsaktuator (202) ausgestattet ist und wobei ein erster Anteil der Betätigungskraft durch Betätigung des elektromechanischen Bremsaktuators (202) mechanisch und ein zweiter Anteil der Betätigungskraft durch Betätigung einer Hydraulikdruckquelle (118) hydraulisch erzeugt wird, wobei die Vorrichtung (300) folgende Komponenten umfasst:

   - eine Einrichtung (310) zum Erfassen eines auf den elektromechanischen Bremsaktuator (202) bezogenen und auf den ersten Betätigungskraftanteil hinweisenden ersten Parameters;
   - eine Einrichtung (320) zum Ermitteln eines auf den zweiten Betätigungskraftanteil hinweisenden zweiten Parameters aus dem Verlauf des erfassten ersten Parameters; und
   - eine Einrichtung (330) zum Ermitteln der an der Fahrzeugbremse (200) anliegenden Betätigungskraft aus dem ersten und zweiten Parameter.

16. Vorrichtung (300) nach Anspruch 15, ferner umfassend eine Vergleichseinrichtung (350) zum Vergleichen des aus dem zweiten Parameter ermittelbaren Betätigungskraftanteils mit einem aus einer Stromaufnahme der Hydraulikdruckquelle (118) ermittelten zweiten Betätigungskraftanteil.

17. Kraftfahrzeugbremsanlage (100), umfassend einen elektromechanischen Bremsaktuator (202), einen Hydraulikkreis (102) mit Hydraulikdruckquelle (118), eine mit dem elektromechanischen Bremsaktuator (202) und der Hydraulikdruckquelle (118) gekoppelte Radbremse (200) und eine Vorrichtung (300) gemäß Anspruch 15 oder 16.

**Claims**

1. Method for determining an actuating force applied to a vehicle brake (200), wherein the vehicle brake (200) is equipped with an electromechanical brake actuator (202) and wherein a first actuating-force component is generated mechanically by actuation of the electromechanical brake actuator (202) and a second actuating-force component is generated hydraulically by actuation of a hydraulic pressure source (118), comprising the following steps:

   - detecting a first parameter related to the electromechanical brake actuator (202) and indicating the first actuating-force component;
   - determining a second parameter indicating the second actuating-force component from a progression of the detected first parameter; and
   - determining the actuating force applied to the vehicle brake (202) from the first and the second parameters.

2. Method according to Claim 1, wherein the first parameter is detected during the actuation of the electromechanical brake actuator (202) and corresponds to an electrical current consumption of an electric motor (206) assigned to the electromechanical brake actuator (202).

3. Method according to Claim 2, wherein the second parameter is determined from the temporal progression of the electrical current consumption.

4. Method according to Claim 3, wherein the second parameter indicates an idling phase of the electric motor (206) and thereby corresponds to a duration of the idling phase of the motor or an integrated motor speed during the idling phase of the motor.

5. Method according to one of the preceding claims, wherein the second actuating-force component is determined from the second parameter and from a brake stiffness.

6. Method according to one of the preceding claims, wherein the first actuating-force component and the second actuating-force component are generated during one or more actuation phases.

7. Method according to Claim 6, wherein during at least one actuation phase the electromechanical brake actuator (202) and the hydraulic pressure source (118) are actuated simultaneously.

8. Method according to one of Claims 1 to 5, wherein the first actuating-force component and the second actuating-force component are generated in three actuation phases, wherein during the first actuation phase the electromechanical brake actuator (202) is actuated, during the second actuation phase the hydraulic pressure source (118) is actuated, and during the third actuation phase the electromechanical brake actuator (202) and the hydraulic pressure source (118) are actuated simultaneously.

9. Method according to Claim 7 or 8, wherein the force component generated in the case of simultaneous actuation is generated in approximately equal parts by the electromechanical brake actuator (202) and the hydraulic pressure source (118).

10. Method according to Claim 8, wherein the actuating force applied during the first actuating procedure amounts to more than 60 % of the actuating force that can be provided maximally by the electromechanical brake actuator (202).

11. Method according to one of the preceding claims, wherein the second actuating-force component is additionally determined from a current consumption of an electric motor (120) assigned to the hydraulic pressure source (118), detected during the actuation of the hydraulic pressure source (118), and wherein preferably the second actuating-force component determined from the current consumption of the electric motor (120) assigned to the hydraulic pressure source (118) is compared for plausibility checking with the second actuating-force component determined from the second parameter.

12. Method according to one of the preceding claims, wherein the method for determining the actuating force is carried out within the scope of a parkingbrake procedure.

13. Computer program product with program code for implementing the method according to at least one of the preceding claims when the computer program product is executed on a computer device.

14. Computer program product according to Claim 13, which is stored on a computer-readable recording medium.

15. Apparatus (300) for determining an actuating force applied to a vehicle brake, wherein the vehicle brake (200) is equipped with an electromechanical brake actuator (202) and wherein a first component of the actuating force is generated mechanically by actuation of the electromechanical brake actuator (202) and a second component of the actuating force is generated hydraulically by actuation of a hydraulic pressure source (118), the apparatus (300) including the following components:

   - a device (310) for detecting a first parameter related to the electromechanical brake actuator (202) and indicating the first actuating-force component;
   - a device (320) for determining a second parameter indicating the second actuating-force component from the progression of the detected first parameter; and
   - a device (330) for determining the actuating force applied to the vehicle brake (200) from the first and second parameter.

**16.** Apparatus (300) according to Claim 15, further comprising a comparing device (350) for comparing the actuating-force component that is capable of being determined from the second parameter with a second actuating-force component determined from a current consumption of the hydraulic pressure source (118).

**17.** Motor vehicle braking system (100), comprising an electromechanical brake actuator (202), a hydraulic circuit (102) with hydraulic pressure source (118), a wheel brake (200) coupled with the electromechanical brake actuator (202) and with the hydraulic pressure source (118), and an apparatus (300) according to Claim 15 or 16.

**Revendications**

**1.** Procédé de détermination d'une force de commande appliquée à un frein de véhicule (200), le frein de véhicule (200) étant équipé d'un actionneur de frein électromécanique (202) et une première composante de force de commande étant produite mécaniquement par commande de l'actionneur de frein électromécanique (202) et une deuxième composante de force de commande étant produite hydrauliquement par commande d'une source de pression hydraulique (118), le procédé comprenant les étapes suivantes :

- détection d'un premier paramètre relatif à l'actionneur de frein électromécanique (202) et indicatif de la première composante de force de commande ;
- détermination d'un deuxième paramètre indicatif de la deuxième composante de force de commande à partir de l'allure du premier paramètre détecté ; et
- détermination de la force de commande appliquée au frein de véhicule (202) à partir du premier et du deuxième paramètre.

**2.** Procédé selon la revendication 1, dans lequel le premier paramètre est détecté pendant la commande de l'actionneur de frein électromécanique (202) et correspond à une consommation de courant électrique d'un moteur électrique (206) associé à l'actionneur de frein électromécanique (202).

**3.** Procédé selon la revendication 2, dans lequel le deuxième paramètre est déterminé à partir de l'allure dans le temps de la consommation de courant électrique.

**4.** Procédé selon la revendication 3, dans lequel le deuxième paramètre indique une phase de ralenti du moteur électrique (206)
et correspond de préférence à une durée de la phase de ralenti du moteur ou à un régime moteur intégré pendant la phase de ralenti du moteur.

**5.** Procédé selon l'une des revendications précédentes, dans lequel la deuxième composante de force de commande est déterminée à partir du deuxième paramètre et d'une rigidité du frein.

**6.** Procédé selon l'une des revendications précédentes, dans lequel la première composante de force de commande et la deuxième composante de force de commande sont produites pendant une ou plusieurs phases de commande.

**7.** Procédé selon la revendication 6, dans lequel l'actionneur de frein électromécanique (202) et la source de pression hydraulique (118) sont commandés en même temps pendant au moins une phase de commande.

**8.** Procédé selon l'une des revendications 1 à 5, dans lequel la première composante de force de commande et la deuxième composante de force de commande sont produites en trois phases de commande, l'actionneur de frein électromécanique (202) étant commandé pendant la première phase de commande, la source de pression hydraulique (118) étant commandée pendant la deuxième phase de commande et l'actionneur de frein électromécanique (202) et la source de pression hydraulique (118) étant commandés en même temps pendant la troisième phase de commande.

**9.** Procédé selon la revendication 7 ou 8, dans lequel la composante de force produite lors de la commande simultanée est produite à parts à peu près égales par l'actionneur de frein électromécanique (202) et la source de pression hydraulique (118).

**10.** Procédé selon la revendication 8, dans lequel la force de commande appliquée pendant la première phase de commande représente plus de 60 % de la force de commande maximale applicable par l'actionneur de frein électromécanique (202).

11. Procédé selon l'une des revendications précédentes, dans lequel la deuxième composante de force de commande est déterminée en plus à partir d'une consommation de courant d'un moteur électrique (120) associé à la source de pression hydraulique (118), détectée pendant la commande de la source de pression hydraulique (118), et dans lequel, de préférence, la deuxième composante de force de commande déterminée à partir de la consommation de courant du moteur électrique (120) associé à la source de pression hydraulique (118) est comparée, pour contrôle de plausibilité, avec la deuxième composante de force de commande déterminée à partir du deuxième paramètre.

12. Procédé selon l'une des revendications précédentes, dans lequel le procédé est mis en oeuvre pour déterminer la force de commande dans le cadre d'un serrage du frein de stationnement.

13. Programme d'ordinateur avec un code de programme pour mettre en oeuvre le procédé selon au moins l'une des revendications précédentes lorsque le programme d'ordinateur est exécuté sur un dispositif informatique.

14. Programme d'ordinateur selon la revendication 13, lequel est stocké sur un support d'enregistrement lisible par un ordinateur.

15. Dispositif (300) de détermination d'une force de commande appliquée à un frein de véhicule, le frein de véhicule (200) étant équipé d'un actionneur de frein électromécanique (202) et une première composante de la force de commande étant produite mécaniquement par commande de l'actionneur de frein électromécanique (202) et une deuxième composante de la force de commande étant produite hydrauliquement par commande d'une source de pression hydraulique (118), le dispositif (300) comprenant les composants suivants :

- un moyen (310) de détection d'un premier paramètre relatif à l'actionneur de frein électromécanique (202) et indicatif de la première composante de force de commande ;
- un moyen (320) de détermination d'un deuxième paramètre indicatif de la deuxième composante de force de commande à partir de l'allure du premier paramètre détecté ; et
- un moyen (330) de détermination de la force de commande appliquée au frein de véhicule (200) à partir du premier et du deuxième paramètre.

16. Dispositif (300) selon la revendication 15, comprenant en outre un moyen de comparaison (350) pour comparer la composante de force de commande susceptible d'être déterminée à partir du deuxième paramètre avec une deuxième composante de force de commande déterminée à partir d'une consommation de courant de la source de pression hydraulique (118).

17. Système de freinage de véhicule automobile (100), comprenant un actionneur de frein électromécanique (202), un circuit hydraulique (102) avec une source de pression hydraulique (118), un frein de roue (200) accouplé à l'actionneur de frein électromécanique (202) et à la source de pression hydraulique (118) et un dispositif (300) selon la revendication 15 ou 16.

# Fig. 1

Fig. 2

Fig. 3

Vorrichtung 300

Sensorsignale

Speichereinheit 340

Erfassungseinrichtung 310
Motorstromaufnahme $I_{EPB}(t)$, $I_{Hydr.}(t)$
Motordrehzahl n(t)

Einrichtung 320
zum Ermitteln eines zweiten Parameters

Einrichtung 330
zum Ermitteln der Betätigungskraft F

Vergleichseinrichtung 350

Prozessor 360

EP 2 707 263 B1

**Erste EPB-Betätigung**

**Betätigung der Hydraulikdruckquelle**

**zweite EPB-Betätigung**

Betätigungsstrom $I_{EPB}$, $I_{Hydr}$

$I_{EPB}$

$I_{Hydr}$

a

c

ESC

EPB

EPB

b

d

e

Betätigungskraftanteil aus
Translationsweg des
Betätigungsgliedes und
der Bremsensteifigkeit

## Fig. 4b

Hydraulikdruck p, Betätigungskraft F

100
(bar)

50

Betätigungskraft

Hydraulikdruck

g

Erste
Betätigungsphase

Zweite
Betätigungsphase

1.0

Dritte
Betätigungsphase

Zeit t (s)     2.0

## Fig. 4a

**IN DER BESCHREIBUNG AUFGEFÜHRTE DOKUMENTE**

**In der Beschreibung aufgeführte Patentdokumente**

- DE 19732168 C2
- DE 102009028505 A1